(19) Europäisches Patentamt

European Patent Office

Office européen des brevets

(11) Veröffentlichungsnummer: **0 301 493 B1**

(12) **EUROPÄISCHE PATENTSCHRIFT**

(45) Veröffentlichungstag der Patentschrift: **15.01.92**

(51) Int. Cl.⁵: **C01B 13/02**

(21) Anmeldenummer: **88112080.2**

(22) Anmeldetag: **27.07.88**

(54) **Chemischer Sauerstoffgenerator mit tablettierter Chloratfüllung.**

(30) Priorität: **29.07.87 DE 3725105**

(43) Veröffentlichungstag der Anmeldung:
**01.02.89 Patentblatt 89/05**

(45) Bekanntmachung des Hinweises auf die
Patenterteilung:
**15.01.92 Patentblatt 92/03**

(84) Benannte Vertragsstaaten:
**AT BE CH DE ES FR GB GR IT LI LU NL SE**

(56) Entgegenhaltungen:
**GB-A- 304 292**
**US-A- 3 736 104**

(73) Patentinhaber: **Drägerwerk Aktiengesellschaft**
**Moislinger Allee 53-55**
**W-2400 Lübeck 1(DE)**

(72) Erfinder: **Kolbe, Ernst-Günther**
**Hansestrasse 112**
**W-2410 Mölln(DE)**
Erfinder: **Fiedler, Hans-Burkhardt, Dipl.-Ing.**
**Steinkamp 27**
**W-2430 Neustadt/ Holst(DE)**
Erfinder: **Ernst, Rainer**
**Dornstrasse 21**
**W-2401 Curau(DE)**

## Beschreibung

Die Erfindung betrifft einen chemischen Sauerstoffgenerator mit einem Chemikalgemisch auf Alkalimetallchlorat-Basis, insbesondere Natriumchlorat ($NaClO_3$), welches die Füllung einer Patrone mit einer Startvorrichtung und einem Sauerstoffauslaß bildet.

Ein derartiger Sauerstoffgenerator ist aus der DE-OS 30 39 442 bekanntgeworden.

Die bekannten Sauerstoffgeneratoren besitzen eine Füllung aus einem gepreßten Chloratkörper, welche als Sauerstoffkerzen bezeichnet werden, die entweder als eine Einzelkerze vorliegen oder aus mehreren hintereinandergeschalteten Einzelkerzen zusammengesetzt sind. Diese sind in einem wärmeisoliert ausgeführten Gehäuse aufgenommen, welches eine Startvorrichtung zur Zündung der Anfangskerze aufweist, welche unter Wärmeentwicklung Sauerstoff abgibt, der von einem entsprechenden Sauerstoffauslaß zu einem Verbraucher geführt werden kann. Die gepreßte Chemikalmasse darf schon während ihres Herstellungsprozesses keine inneren Hohlräume oder sogar Risse aufweisen, da diese Fehler eine gleichmäßige Zersetzungsreaktion während des Gebrauch verhindern. Um eine ununterbrochene Lieferleistung des abgegebenen Sauerstoffes zu gewährleisten, muß nämlich dafür gesorgt sein, daß der Wärmeübergang während des Fortschreitens der Reaktionszone auf das noch unzersetzte Chemikal ohne Unterbrechung stattfindet und daß die zur Aufrechterhaltung der Zersetzung notwendige Wärmemenge unter Beibehaltung der erforderlichen Zündtemperatur während der gesamten Nutzungsdauer erhalten bleibt. Es ist daher stets darauf zu achten, daß auch während des Transportes fertiger Sauerstoffgeneratoren und auch während ihrer Benutzung beispielsweise als Sauerstofflieferant in einem Atemschutzgerät nicht die geringsten Risse oder Zerbröckelungen innerhalb der gepreßten Chemikalmasse auftreten. Dies kann zu einer vorher nicht erkennbaren Gebrauchsuntauglichkeit führen. Es sind daher aufwendige Schutzmaßnahmen notwendig, um die Chemikalpatrone der bekannten Sauerstoffgeneratoren vor Erschütterungen zu schützen.

In den Ausführungsformen, bei welchen mehrere Kerzen hintereinandergeschaltet werden, müssen die so entstandenen Zwischenräume zwischen den Einzelkerzen durch weitere Zündsätze überbrückt werden.

Die Sauerstoff-Liefermenge der gepreßten Einzelkerzen hängt von der Menge der Chemikalmasse ab, die jedoch zur Erhöhung der Sauerstoff-Liefermenge nicht beliebig vergrößert werden kann. Die dafür notwendigen Preßwerkzeuge stünden in keinem wirtschaftlichen Verhältnis zu dem erzielten Nutzen. Auch das Hintereinanderschalten von immer mehr Einzelkerzen findet seine Beschränkung außer in der voluminösen Bauform in der Schwierigkeit, zahlreiche aufeinanderfolgende Zündübertragungen sicher zu beherrschen.

Der vorliegenden Erfindung liegt somit die Aufgabe zugrunde, einen chemischen Sauerstoffgenerator der genannten Art so zu verbessern, daß die Füllung stoßunempfindlich ist und in jeder beliebigen äußeren Form und Größe gestaltet werden kann, und daß ein Fortschreiten der Reaktionszone ohne weitere Hilfsmittel sichergestellt ist.

Die Lösung der Aufgabe erfolgt dadurch, daß die Füllung aus einer festen Schüttung von Chemikaltabletten besteht, welche unter Bildung möglichst kleiner Berührungsflächen aneinander liegen. Die Lösung beruht auf der überraschenden Erkenntnis, daß der Reaktionsabbruch an Riß- bzw. Fügeflächen der bekannten gepreßten Einzelkerzen infolge des Abflusses der übergehenden Wärme in das große Volumen des folgenden Kerzenteils eintritt, weil dadurch die Stelle des Wärmeüberganges nicht die Reaktionstemperatur erreichen kann. Im Gegensatz dazu wird durch den geringflächigen Kontakt einer jeden Einzeltablette zu der ihr benachbart liegenden die entstehende Reaktionswärme in einem engen Bereich bei entsprechend höherer Temperatur zusammengehalten. Das heiße bei der Reaktion erzeugte Gas umspült die große Oberfläche der Tabletten und bewirkt eine intensive Vorwärmung. Unter dem innigen Kontakt an der kleinen Berührungsfläche kann die Zündung unter diesen Voraussetzungen leicht und zuverlässig auf die folgende Tablette übertragen werden. Die dicht aneinander liegenden Chemikaltabletten sind auch gegen Stoß und Rütteln unempfindlich. Zur Herstellung von Patronen hoher Sauerstoff-Liefermengen braucht nunmehr lediglich ein Behälter geeigneter Größe mit einer Schüttung versehen zu werden. Form und Größe der Patrone sind jetzt nicht mehr abhängig von der Möglichkeit, entsprechende Kerzen pressen zu können.

Eine bevorzugte Zusammensetzung einer Chemikaltablette auf Basis eines Alkalimetallchlorats besteht aus

90 - 97 % Natriumchlorat ($NaClO_3$)

0 - 6 % Natriummonoxid ($Na_2O$)

1 - 5 % Glimmer

0 - 0,5 % Silizium.

0 - 10 % Natriumperoxid ($Na_2O_2$)

Zur Steigerung der Bruchfestigkeit der Tabletten werden diese vorzugsweise während 3 - 20 Stunden bei 100 - 200 ˚C getempert.

Um Rüttel- und Stoßfestigkeit während der Bereitschaft zu sichern und eintretende Volumenänderungen der Chemikaltabletten während der Reaktion auszugleichen und dadurch eine beständige innige Berührung der Tabletten untereinander zu gewährleisten, ist zweckmäßigerweise eine auf die Chemikaltabletten wirkende Vorspanneinrichtung vorgesehen. Bei einer Volumenreduktion während des Reaktionsvorganges werden dadurch die übriggebliebenen, noch nicht zersetzten Chemikaltabletten in Berührung zueinander gehalten.

Um unterschiedliche Sauerstofflieferleistungen abgeben zu können, ist es zweckmäßig, die Schüttung aus mehreren, hintereinandergeschalteten Zonen unterschiedlicher Reaktionsgeschwindigkeit auszubilden. So kann vorteilhafterweise durch Wahl unterschiedlicher Zumengungen an Silizium bzw. Metalloxiden als Katalysator zu der Chemikalmischung eine erste Zone mit hoher Reaktionsgeschwindigkeit vorgesehen sein, welche eine entsprechend hohe Sauerstofflieferleistung aufweist, der eine weitere Zone mit geringerem Katalysator-Anteil in der Chemikalmischung folgt, welche eine entsprechend geringere Reaktionsgeschwindigkeit zur Abgabe einer erniedrigten Sauerstofflieferleistung besitzt.

Eine andere zweckmäßige Zusammensetzung der Chemikalfüllung aus den einzelnen Tabletten besteht darin, daß sie unterschiedliche Korngrößen besitzen, und zwar derart, daß in die Zwischenräume einer Tablettenschüttung weitere Chemikaltabletten geringerer Korngröße rieselfähig sind. Dadurch ist es möglich, durch die eingerieselten kleineren Tabletten die Schüttungsdichte zu erhöhen. Wenn dann alle Zwischenräume gefüllt sind, kann durch nochmaliges Rütteln der gesamten Füllung bei geschlossenem Patronengehäuse das ursprüngliche Schüttungsvolumen vergrößert werden, so daß die Wände der Patrone unter Spannung gesetzt werden. Durch dieses Füllverfahren werden die Patronenwände als Vorspanneinrichtung herangezogen, um die einzelnen Tabletten gegeneinander zu drücken und so die notwendigen Berührungsflächen während des Abbrandes sicherzustellen. Dabei kann es günstig sein, die Chemikaltabletten unterschiedlicher Korngröße auch mit unterschiedlichen Mischungsverhältnissen bezüglich ihrer Bestandteile auszustatten. Dadurch hat man eine Mischung von schnell reagierendem Chemikal in den Zwischenräumen der Füllung mit einem langsam reagierenden Chemikal als Hauptbestandteil, so daß die Zündübertragung von einer Tablette zur anderen noch erhöht wird.

Allgemein ist jede Form von Chemikaltabletten geeignet, insbesondere annähernd kugelförmige Tabletten oder auch zylinderförmige, deren Stirnflächen jeweils kalottenförmig ausgeführt sind. Dabei können die Tablettenkugeln aus einander umschließenden Schichten unterschiedlicher Reaktionsgeschwindigkeit bestehen (Manteltablette). Bei den zylinderförmigen Tabletten ist es auch zweckmäßig, einen schichtweisen Aufbau der Tabletten auszuführen, bei dem abwechselnd eine Schicht mit hoher Reaktionsgeschwindigkeit einer Schicht mit niedriger Reaktionsgeschwindigkeit folgt (Mehrschichttablette). Durch diese Maßnahmen wird erreicht, daß die Berührungsflächen der Einzeltabletten die erforderliche Wärmemenge zur Zündung der benachbarten Tablette besser übertragen können.

Ein Ausführungsbeispiel der Erfindung wird anhand einer schematischen Zeichnung dargestellt und im folgenden näher erläutert.

Es zeigen

Fig. 1      den Schnitt durch einen chemischen Sauerstoffgenerator,

Fig. 2      eine Einzeldarstellung einer mehrschichtigen Chemikaltablette.

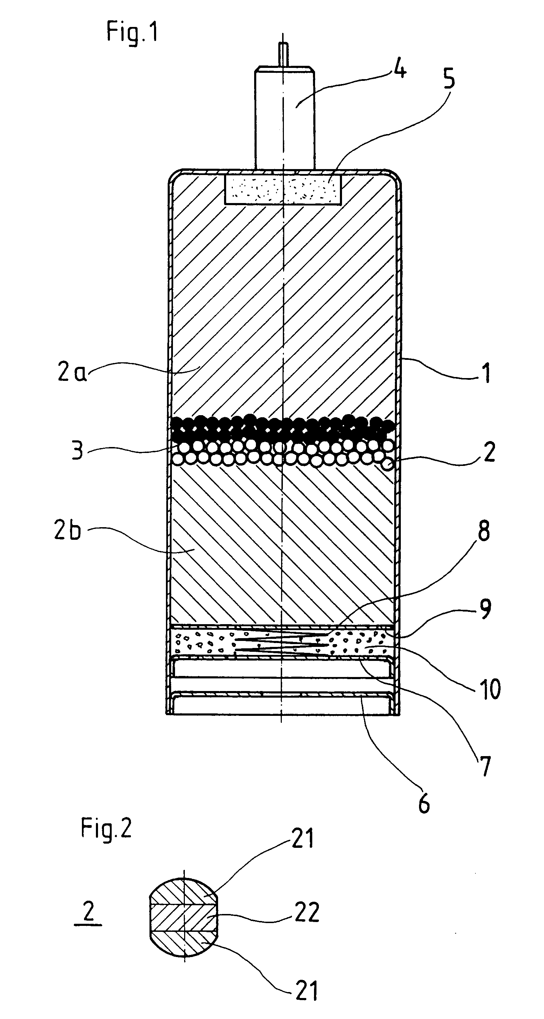

Der in Fig. 1 dargestellte chemische Sauerstoffgenerator besitzt eine Patrone (1), die unter anderem mit einer Schüttung (2a, 2b) von Sauerstoff abgebenden Chemikaltabletten (2) gefüllt ist. An ihrem einen Ende besitzt die Patrone (1) einen an sich bekannten Auslöser (4) und eine Starterfüllung (5). An dem dem Auslöser (4) gegenüberliegenden Ende der Patrone (1) ist ein Auslaßboden (6) vorgesehen, aus dem der im Betrieb freiwerdende Sauerstoff an einen nicht dargestellten Verbraucher abgeleitet werden kann. Dem Auslaßboden (6) ist eine durchlässige Bodenschale (7) vorgelagert, die an der Innenwand der Patrone (1) befestigt ist und die eine Druckfeder (8) trägt, welche an einen im Inneren der Patrone (1) frei beweglichen Füllungsboden (9) angreift. Der Zwischenraum zwischen Bodenschale (7) und Füllungsboden (9) ist mit einem Staubfilter (10) gefüllt.

Zum Betrieb des Sauerstoffgenerators werden mit Hilfe des Auslösers (4) und der Starterfüllung (5) die Chemikaltabletten (2) gezündet, wobei sie unter Wärmeentwicklung Sauerstoff abgeben. Dabei bilden die reagierenden Tabletten (2) eine entlang der Füllung fortschreitende Reaktionsfront (3), die eine schon reagierte Teilfüllung (2a) hinter sich läßt und in die noch nicht reagierte Teilfüllung (2b) fortschreitet. Dabei wird Sauerstoff freigesetzt, der über den durchlässigen Füllungsboden (9), das Staubfilter (10) und die durchlässige Bodenschale (7) zum Auslaßboden (6) und von dort zu dem Verbraucher geleitet werden kann. Eine eventuelle Volumenverminderung wird durch den sich nachschiebenden Füllungsboden (9) infolge der Federkraft der Druckfeder (8) ausgeglichen. Die bei der Sauerstoffentwicklung freiwerdenden Staubpartikel werden durch das Staubfilter (10) abgehalten.

In Fig. 2 ist im Schnitt eine einzelne Chemikaltablette (2) dargestellt, die aus einem zylindrischen Mittelteil (22) und zwei kalottenförmigen Endteilen (21) besteht. Dabei enthält der Mittelteil (22) ein Chemikal geringerer Reaktionsgeschwindigkeit und die Endteile (21) ein Chemikal höherer Reaktionsgeschwindigkeit.

**Patentansprüche**

1. Chemischer Sauerstoffgenerator mit einem Chemikalgemisch auf Alkalimetallchlorat-Basis, insbesondere Natriumchlorat (NaClO₃), welches die Füllung einer Patrone mit einer Startvorrichtung und einem Sauerstoffauslaß bildet, dadurch gekennzeichnet, daß die Füllung aus einer festen Schüttung (2a, 2b) von Chemikaltabletten (2) besteht, die unter Bildung möglichst kleiner Berührungsflächen aneinander liegen.

2. Chemischer Sauerstoffgenerator nach Anspruch 1, dadurch gekennzeichnet, daß zur Erhöhung des Kontaktdruckes an den Berührungsflächen eine auf die Chemikaltabletten (2) wirkende Vorspanneinrichtung (7, 8, 9) vorgesehen ist.

3. Chemischer Sauerstoffgenerator nach Anspruch 1 oder 2, dadurch gekennzeichnet, daß die Füllung (2a, 2b) aus mehreren hintereinandergeschalteten Zonen mit Tabletten (2) unterschiedlicher Reaktionsgeschwindigkeit gebildet ist.

4. Chemischer Sauerstoffgenerator nach Anspruch 3, dadurch gekennzeichnet, daß die Reaktionsgeschwindigkeit der Tabletten (2) durch unterschiedliche Zumengungen an Zusatzstoffen festgelegt ist.

5. Chemischer Sauerstoffgenerator nach einem der Ansprüche 1 bis 4, dadurch gekennzeichnet, daß die Chemikaltabletten (2) unterschiedliche Korngrößen derart aufweisen, daß die Chemikaltabletten (2) geringerer Körnung durch die Zwischenräume der Füllung (2a, 2b) mit Chemikaltabletten (2) der größeren Körnung rieselfähig sind.

6. Chemischer Sauerstoffgenerator nach Anspruch 5, dadurch gekennzeichnet, daß die Chemikaltabletten (2) unterschiedlicher Korngröße jeweils unterschiedliche Mischungsverhältnisse bezüglich ihrer Bestandteile an Zusatzstoffen aufweisen.

7. Chemischer Sauerstoffgenerator nach einem der Ansprüche 1 bis 6, dadurch gekennzeichnet, daß die Chemikaltabletten (2) mehrschichtig aufgebaut sind, wobei Schichten (21, 22) unterschiedlicher Reaktionsgeschwindigkeit abwechselnd vorliegen.

8. Chemischer Sauerstoffgenerator nach einem der Ansprüche 1 bis 6, dadurch gekennzeichnet, daß die Chemikaltabletten (2) mehrschichtig aufgebaut sind, wobei Schichten unterschiedlicher Reaktionsgeschwindigkeit einander mantelförmig umschließen.

9. Verfahren zur Herstellung eines chemischen Sauerstoffgenerators mit einem Chemikalgemisch auf Alkalimetallchlorat-Basis, insbesondere Natriumchlorat (NaClO₃), welches in eine Patrone mit einer Startvorrichtung und einem Sauerstoffauslaß gefüllt wird, dadurch gekennzeichnet, daß die Patrone mit einer ersten Grobkornfüllung eines tablettenförmigen Chemikalgemisches ausgefüllt wird, anschließend eine zweite Feinkornfüllung in die Hohlräume der Grobkornfüllung bis zu deren Ausfüllung eingerieselt und die gesamte Füllung nach dem Verschließen des Patronengehäuses gerüttelt wird.

**Claims**

1. A chemical oxygen generator with a chemical mixture based on alkali metal chlorate, in particular sodium chlorate (NaClO₃), which forms the filling of a cartridge with a starting device and an oxygen outlet, characterised in that the filling consists of a solid packing (2a, 2b) of chemical pellets (2), which lie together forming the smallest possible contact surfaces.

2. A chemical oxygen generator according to claim 1, characterised in that for increasing the contact pressure on the contact surfaces there is provided a pre-stressing device (7, 8, 9) acting on the chemical pellets (2).

3. A chemical oxygen generator according to claim 1 or 2, characterised in that the filling (2a, 2b) is formed of several zones, arranged one after the other, with pellets (2) of varying reaction rates.

4. A chemical oxygen generator according to claim 3, characterised in that the reaction rate of the pellets (2) is fixed by varying mixes of additives.

5. A chemical oxygen generator according to one of claims 1 to 4, characterised in that the chemical pellets (2) have varying grain sizes, such that the chemical pellets (2) of smaller granulation are able to trickle through the intermediate spaces of the filling (2a, 2b) with chemical pellets (2) of the larger granulation.

6. A chemical oxygen generator according to claim 5, characterised in that the chemical pellets (2) of varying grain sizes have in each case varying mixing proportions regarding the constituents of the additives.

7. A chemical oxygen generator according to one of claims 1 to 6, characterised in that the chemical pellets (2) are built up in multi-layers, wherein layers (21,22) of varying reaction rates are alternating.

8. A chemical oxygen generator according to one of claims 1 to 6, characterised in that the chemical pellets (2) are built up in multi-layers, wherein layers of varying reaction rates enclose each other in the form of a casing.

9. A method for manufacturing a chemical oxygen generator with a chemical mixture based on alkali metal chlorate, in particular sodium chlorate ($NaClO_3$), which is filled into a cartridge with a starting device and an oxygen outlet, characterised in that the cartridge is filled up with a first coarse granular filling of a pellet-formed chemical mixture, then a second fine granular filling is trickled into the cavities of the coarse granular filling until this is filled up and the entire filling is shaken after sealing the cartridge housing.

## Revendications

1. Générateur chimique d'oxygène contenant un mélange de substances chimiques à base de chlorate de métal alcalin, notamment du chlorate de sodium ($NaClO_3$), qui forme le garnissage d'une cartouche comportant un dispositif de déclenchement et une sortie d'oxygène, caractérisé en ce que le garnissage est constitué d'un remplissage (2a, 2b) solide de pastilles de substances chimiques (2) qui s'appliquent les unes contres les autres en formant des surfaces de contact aussi réduites que possible.

2. Générateur chimique d'oxygène selon la revendication 1, caractérisé en ce qu'il est prévu un dispositif de précontrainte (7, 8, 9) agissant sur les pastilles de substances chimiques (2), pour accroître la pression de contact sur les surfaces de contact.

3. Générateur chimique d'oxygène selon la revendication 1 ou 2, caractérisé en ce que le garnissage (2a, 2b) est formé par plusieurs zones successives comportant des pastilles à vitesse de réaction différente.

4. Générateur chimique d'oxygène selon la revendication 3, caractérisé en ce que la vitesse de réaction des pastilles (2) est déterminée par des ajouts différents d'additifs.

5. Générateur chimique d'oxygène selon l'une des revendications 1 à 4, caractérisé en ce que les pastilles de substances chimiques (2) présentent une granulométrie différente telle que les pastilles (2) aux grains plus petits puissent s'écouler à travers les interstices du garnissage (2a, 2b) constitué des pastilles (2) aux grains plus gros.

6. Générateur chimique d'oxygène selon la revendication 5, caractérisé en ce que les pastilles de substances chimiques (2) de granulométrie différente présentent chaque fois des rapports de mélange différents en ce qui concerne leurs proportions d'additifs.

7. Générateur chimique d'oxygène selon l'une des revendications 1 à 6, caractérisé en ce que les pastilles de substances chimiques (2) comportent plusieurs couches, des couches (21, 22) à vitesse de réaction différente s'alternant.

8. Générateur chimique d'oxygène selon l'une des revendications 1 à 6, caractérisé en ce que les pastilles de substances chimiques (2) sont constituées de plusieurs couches, les couches à vitesse de réaction différente s'entourant les unes les autres à la manière d'une gaine.

9. Procédé de fabrication d'un générateur chimique d'oxygène contenant un mélange de substances chimiques à base de chlorate de métal alcalin, notamment du chlorate de sodium ($NaClO_3$), qui forme le garnissge d'une cartouche comportant un dispositif de déclenchement et une sortie d'oxygène, caractérisé en ce que la cartouche est remplie d'un premier garnissage à grains grossiers d'un mélange de substances chimiques en forme de pastilles, en ce qu'ensuite un deuxième garnissage à grains fins est versé dans les cavités du garnissage à grains grossiers jusqu'à ce qu'elles soient remplies et en ce que l'ensemble du garnissage est ensuite soumis à des vibrations après fermeture du boîtier de la cartouche.

Fig.1

Fig.2